(19) Europäisches Patentamt
European Patent Office
Office européen des brevets

(11) **EP 1 723 458 B1**

(12) **FASCICULE DE BREVET EUROPEEN**

(45) Date de publication et mention
de la délivrance du brevet:
**13.01.2016 Bulletin 2016/02**

(21) Numéro de dépôt: **05739437.1**

(22) Date de dépôt: **09.03.2005**

(51) Int Cl.:
*G01D 5/353* (2006.01)     *G01M 11/08* (2006.01)
*G01M 5/00* (2006.01)     *G02B 6/02* (2006.01)

(86) Numéro de dépôt international:
**PCT/FR2005/050152**

(87) Numéro de publication internationale:
**WO 2005/088375 (22.09.2005 Gazette 2005/38)**

(54) **SYSTEME DE MESURE DISTRIBUEE DES COURBURES D UNE STRUCTURE**

SYSTEM ZUR VERTEILTEN MESSUNG VON STRUKTURBIEGUNGEN

SYSTEM FOR THE DISTRIBUTED MEASUREMENT OF STRUCTURAL BENDING

(84) Etats contractants désignés:
**AT BE BG CH CY CZ DE DK EE ES FI FR GB GR HU IE IS IT LI LT LU MC NL PL PT RO SE SI SK TR**

(30) Priorité: **11.03.2004 FR 0450495**

(43) Date de publication de la demande:
**22.11.2006 Bulletin 2006/47**

(73) Titulaire: **Commissariat à l'Énergie Atomique et aux Énergies Alternatives
75015 Paris (FR)**

(72) Inventeurs:
• **MAGNE, Sylvain**
  **F-92320 CHATILLON (FR)**
• **FERDINAND, Pierre**
  **F-78800 HOUILLES (FR)**

(74) Mandataire: **Ahner, Philippe et al
BREVALEX
95, rue d'Amsterdam
75378 Paris Cedex 8 (FR)**

(56) Documents cités:
EP-A- 1 235 089     WO-A- 01/33165
DE-A- 2 655 822     US-A- 4 673 540
US-B1- 6 332 365     US-B2- 6 563 107

**Description**

**DOMAINE TECHNIQUE**

L'invention concerne un système de mesure distribuée des courbures d'une structure comprenant un dispositif filiforme, de type câble, instrumenté pour une telle mesure et des moyens de traitement des signaux de mesure délivrés par ce dispositif.

**ÉTAT DE LA TECHNIQUE ANTÉRIEURE**

Dans le domaine de la construction d'ouvrages de génie civil (bâtiments, ponts, autoroutes, voies ferrées, ...), des tassements non uniformes, voire des effondrements imprévus (fontis) peuvent provoquer des accidents graves, en surface et en souterrain, et engendrer des coûts de réhabilitation très importants. De tels évènements peuvent être dus à l'existence de cavités naturelles ou artificielles (carrières, tunnels...) non répertoriées ou, si elles sont connues, insuffisamment consolidées et surchargées.

Les sociétés de travaux publics souhaitent disposer d'un système de mesure adaptable à des structures existantes (ou en construction), permettant de suivre l'évolution précise (spatialement selon un plan horizontal) du tassement des terrains et de déclencher un alarme en cas de rupture indicatrice d'un effondrement local. La partie sensible (au contact du terrain) d'un tel système de mesure devrait pouvoir être installée facilement sous une structure existante par un percement de faible diamètre (le moins intrusif possible) pour ne pas perturber la stabilité de ladite structure. Cette partie sensible devrait aussi pouvoir être transportée (par exemple sur toron de 1 à 2 mètres de diamètre typiquement) et adaptée sans trop de difficultés sur le lieu d'une mesure. La résolution souhaitée pour un tassement serait de l'ordre du millimètre voire moins afin de pouvoir anticiper des modes de dégradation futurs plus importants. L'étendue de la zone à surveiller, variable selon les applications, devrait varier de quelques dizaines à quelques centaines de mètres, voire parfois plus.

Il existe actuellement des moyens de mesure traditionnels (théodolythes, inclinomètres, jauges de déformations, capteurs LVDT (« Linear-Variable Differential Transformer ») qui permettent de réaliser des mesures ponctuelles en des endroits jugés représentatifs d'une structure de génie civil afin d'en tirer éventuellement des informations sur le comportement du sous-sol. De tels moyens (indirects) ne permettent pas de connaître précisément le comportement exact d'un tassement de terrain.

D'autres procédés de mesure d'effondrement sont mis en oeuvre, tel le parcours d'un capteur de pression déporté dans un percement test rempli de mercure. La mesure distribuée de pression permet de remonter à la variation d'altitude par rapport à un point de référence situé hors zone. Ces méthodes ne sont toutefois pas suffisamment performantes en terme de précision, ni suffisamment rapides et, de surcroît, coûtent cher en exploitation car elles mobilisent du personnel.

Il existe également des capteurs de flexion ou de rayons de courbure (« bending or curvature sensors »).

Un document de l'art connu, référencé [1] en fin de description, décrit des capteurs de flexion ou de courbure à fibre optique, dans lesquels des pertes de lumière sont mesurées dans une zone corruguée ou texturée de la fibre soumise à une flexion. Lorsqu'une flexion intervient dans le plan diamétral passant par une telle zone corruguée, une partie de la lumière injectée dans la fibre est perdue vers l'extérieur proportionnellement à l'ampleur de cette flexion. En mesurant alors la proportion de lumière perdue on peut en déduire le rayon de courbure, ou bien un angle de rotation d'une structure par rapport à une autre. Lorsque l'orientation de la courbure n'est pas connue, un montage à trois fibres, dont les textures respectives sont placées à 120° les unes des autres selon une configuration de type « rosette » peut être utilisé. La mesure des trois coefficients de transmission de lumière permet de déduire les deux composantes principales du rayon de courbure dans le plan de section des fibres et l'orientation de ces courbures principales par rapport à la position du capteur sur la structure à surveiller.

Dans ce document la sensibilité à la température n'est pas mentionnée. Ceci entraine une difficulté pratique en utilisation extérieure où les conditions climatiques ne sont pas maîtrisées. Par ailleurs, de tels capteurs nécessitent autant de fibres que de points de mesure (un seul point de mesure par fibre pour éviter toute ambiguïté) et deviennent donc très difficiles et coûteux à câbler lorsqu'il y a un très grand nombre de points de mesure. De plus, le principe de la mesure ne mentionne pas de procédés de compensation des fluctuations d'intensité optique, autres que celles attendues, susceptibles de fausser la mesure. En effet, toute perte optique quelle que soit son origine peut alors être attribuée à tort à une variation de courbure. De telles fluctuations peuvent intervenir du fait de problèmes de connectique, de vieillissement des assemblages collés, de microcourbures le long de la fibre de mesure etc. En outre, un calibrage des capteurs un par un est nécessaire et le réglage peut évoluer dans le temps (pour les mêmes raisons que précédemment) ce qui nécessite un recalibrage périodique des capteurs, coûteux et pas toujours réalisable sur le terrain surtout si la structure est scellée dans le sous-sol.

L'invention à pour objet de pallier les inconvénients énumérés ci-dessus, en proposant un système de mesure distribuée des courbures d'une structure comprenant au moins un dispositif filiforme, de type câble, instrumenté pour une telle mesure et des moyens de traitement des signaux de mesure délivrés par ce dispositif, permettant d'effectuer des mesures de très faible intrusivité par exemple pour un tassement de terrain sous une infrastructure de génie civil existante ou en construction pour éventuellement en localiser les effondrements, et de déterminer la répartition des tractions le long de son axe indépendamment de son état de torsion.

Le brevet US 6,563,107 décrit un dispositif de mesure pour fournir des données correspondant à une configuration géométrique dans l'espace, sous la forme d'un élément de mesure flexible capable de se courber selon un plan ou un axe médian. Ce dispositif comprend des capteurs de flexion espacés, distribués en des endroits connus et séparés par des intervalles connus pour fournir des signaux de flexion indiquant l'état local de la pression en ces endroits connus.

## EXPOSÉ DE L'INVENTION

L'invention concerne un système de mesure distribuée ou répartie des déformations axiales et de flexion d'une structure comprenant au moins un dispositif filiforme instrumenté pour la mesure distribuée ou répartie de ces déformations axiales et de flexion, et des moyens de traitement des signaux de mesure délivrés par ce dispositif, caractérisé en ce que chaque dispositif comprend une armature cylindrique supportant à sa périphérie au moins trois fibres optiques localement parallèles à l'axe de l'armature et fixées à celle-ci, en ce que les fibres optiques sont disposées dans des rainures disposées selon des orientations angulaires déterminées à la périphérie de l'armature et en ce que les moyens de traitement mettent en oeuvre des moyens de multiplexage spectral ou temporel des signaux provenant des fibres optiques.

Selon un premier principe de mesure chaque fibre présente au moins un transducteur à réseau de Bragg, les moyens de traitement permettant une mesure distribuée, les moyens de multiplexage étant des moyens de multiplexage en longueurs d'onde.

Selon un second principe de mesure les moyens de traitement permettent une mesure répartie réalisée par la méthode de réflectométrie Brillouin.

Dans un mode de réalisation avantageux les fibres optiques sont disposées dans au moins trois rainures pratiquées à la périphérie de l'armature.

Avantageusement ledit système comprend au moins une fibre optique supplémentaire qui permet d'effectuer une auto-compensation en température, qui peut comporter des réseaux de Bragg répartis tout au long de sa longueur. Cette fibre optique supplémentaire peut être insérée librement dans un capillaire en plastique à faible friction. Avantageusement le dispositif comprend une enveloppe externe. Avantageusement l'armature est obtenue par pultrusion d'un matériau composite de type verre-époxy ou verre-vynilester. Avantageusement des accroches métalliques peuvent être serties sur l'armature. Les fibres peuvent être récollectées via un câble optique multibrins qui effectue le déport de la mesure vers les moyens de traitement.

Dans un autre mode de réalisation avantageux, l'armature est réalisée par une fibre de positionnement. Le dispositif comprend sept fibres de même diamètre autoplacées selon un mode hexagonal, trois de ces fibres, réparties à 120° à la périphérie de l'armature, étant des fibres optiques. Ces fibres peuvent être enrobées dans une colle polymère,ou maintenues par un capillaire. Dans le cas où l'armature et une fibre optique au moins un réseau de Bragg peut être inscrit dans celle-ci afin de permettre une compensation en température.

Le système de l'invention peut comporter plusieurs dispositifs disposés en différentes positions et selon différentes orientations angulaires sous la structure concernée, au travers de percements peu intrusifs, qui peuvent être comblés après installation. Un tassement de terrain consécutif à des travaux et lors de la vie de la structure se manifeste alors par une traction du dispositif (entraîné par la friction avec le terrain) ainsi que par une modification des courbures locales qui sont alors mesurées directement via les déformations locales supportées par le dispositif.

Le dispositif de l'invention permet d'établir un relevé (tout le long de son axe) des déformations dûe à la traction axiale de celui-ci ainsi que la distribution des déformations induites par les flexions (rayon de courbure, orientation du plan de courbure) permettant de calculer le tassement intervenu depuis son installation.

Plusieurs techniques de mesure peuvent être appliquées aux fibres optiques, et différenciées selon qu'elles sont continues (réparties) ou ponctuelles (distribuées).

Différents procédés de mesures distribuées ( en ce sens que le mesure est réalisée en plusieurs points situés à différentes positions le long du câble) sont envisageables pour instrumenter le dispositif de l'invention. Les transducteurs à réseaux de Bragg (« Bragg gratings ») sont les capteurs les plus utilisés industriellement et notamment dan le secteur du génie civil. Des capteurs interférométriques en lumière blanche (« white-light interferometry ») peuvent être exploités comme jauges de déformation collées ou fixées en surface de la structure à suivre en déformation. Ces capteurs ne nécessitent pas de recalibrage suite à une reconnexion, contrairement aux interféromètres en lumière monochromatique. D'autres capteurs, tels les capteurs de type interféromètres de Fabry-Perot ne permettent pas de multiplexage le long de la même fibre car ils opèrent par réflexion en bout de fibre. De plus, ils utilisent souvent toute le largeur spectrale de la source optique afin de minimiser la longueur de cohérence et ainsi améliorer la résolution spatiale. De ce fait, ils doivent être arrangés en réseau selon une organisation parallèle (par commutation optique).

Une mesure répartie (i. e., continue le long du dispositif) peut être également réalisée par la méthode de réflectométrie Brillouin (« Brillouin Optical Time Domain Reflectometry », B-OTDR), telle que décrite dans le document référencé [2]. Cette méthode est de plus en plus utilisée car elle permet de réaliser des relevés de déformation axiale appliquée à la fibre ainsi que de sa température. Toutefois, les systèmes B-OTDR sont chers, et ne permettent de réaliser que des mesures statiques (temps de réponse évoluant entre quelques minutes et quelques heures). De plus, la précision de mesure en déformation est de l'ordre de 100 micromètres/mètre, ce qui est entre 20 et 100 fois moins performant qu'avec des réseaux de Bragg. Cette solution reste toutefois compétitive pour des câbles très longs pour lesquels le nombre de transducteurs à réseaux de Bragg devient élevé (supérieur à 200).

Le système de l'invention présente les fonctionnalités avantageuses suivantes :

- Il permet de réaliser des mesures distribuées de l'état de courbure global du dispositif solidaire du sous-sol sur des distances hectométriques(voire kilométriques) et de déterminer l'évolution du tassement sous une infrastructure concernée (précision spatiale métrique et précision en profondeur millimétrique). En effet on ne mesure pas directement une profondeur mais une répartition des déformations de flexion le long du dispositif, représentative de la répartition des rayons de courbure et ainsi de la dérivée seconde de la répartition du tassement. Une procédure de traitement de signal adéquate permet alors de remonter à la répartition de ce tassement le long du dispositif.

- Le profil cylindrique du dispositif de l'invention est avantageux. En effet, en plus d'une facilité de réalisation, il est clair que pour des raisons de maniabilité sur le terrain, il est difficile de garantir qu'une structure planaire (de type ruban par exemple) conserve son orientation privilégiée (plan capteur horizontal) lors de son passage au travers d'un percement de faible diamètre et de grande longueur (plusieurs centaine de mètres) à cause des forces de friction. Alors que le dispositif de l'invention est libre de se torsader et de subir des traction axiales ; les mesures de courbure étant indépendantes de son état de torsion et de traction. Cette reconstitution de la distribution des moments de flexion indépendante de l'état de torsion est rendue possible par un concept inspiré des « rosettes » pour lequel les déformations sont mesurées à la circonférence du dispositif en des orientations angulaires précises (par exemple tous les 120°).

- L'invention permet de manipuler une très grande quantité de transducteurs grâce au multiplexage en longueur d'onde (solution à base de réseaux de Bragg) ou à la mesure résolue dans le temps (OTDR-Brillouin) et garantit des mesures stables sur le long terme car tous les capteurs préconisés (réseaux de Bragg, B-OTDR, interféromètres en lumière blanche) présentent une insensibilité aux fluctuations de puissance optique (déconnexion-reconnexion à volonté, sans recalibrage nécessaire).

- La structure sur laquelle sont fixées les fibres optiques est le dispositif lui-même, sans mécanique rapportée, ce qui permet de gagner tant en encombrement qu'en poids et en coût. De plus, l'instrumentation du dispositif peut s'effectuer rapidement en continu grâce à un procédé de défilement (enroulage-déroulage). Finalement, l'orientation de la courbure par rapport à la structure extérieure ne nécessite par de capteurs supplémentaires, car la mesure de la courbure dans l'invention est indépendante de l'état de torsion du dispositif.

- La localisation d'une rupture de la structure concernée (dûe à un effondrement de terrain) est rendue possible grâce à une interrogation par les deux extrémités du dispositif. L'identification des capteurs présents sur la ligne permet de repérer la rupture. Cet avantage est possible avec une technologie à réseaux de Bragg ou une technologie B-OTDR.

- Une représentation matricielle peut être obtenue par la juxtaposition de plusieurs dispositifs de l'invention selon au moins deux orientations (avantageusement orthogonales) et différents placements sous l'infrastructure à surveiller dans la perspective d'une cartographie en deux dimensions de l'évolution d'un tassement.

## BRÈVE DESCRIPTION DES DESSINS

Les figures 1A et 1B illustrent un premier mode de réalisation du dispositif de l'invention instrumenté par des transducteurs à réseaux de Bragg, respectivement dans une représentation longitudinale et dans une coupe transversale.

La figure 2 illustre un second mode de réalisation du dispositif de l'invention.

La figure 3 illustre l'installation du dispositif de l'invention pour la mesure de tassements consécutifs à des excavations.

## EXPOSÉ DÉTAILLÉ DE MODES DE RÉALISATION PARTICULIERS

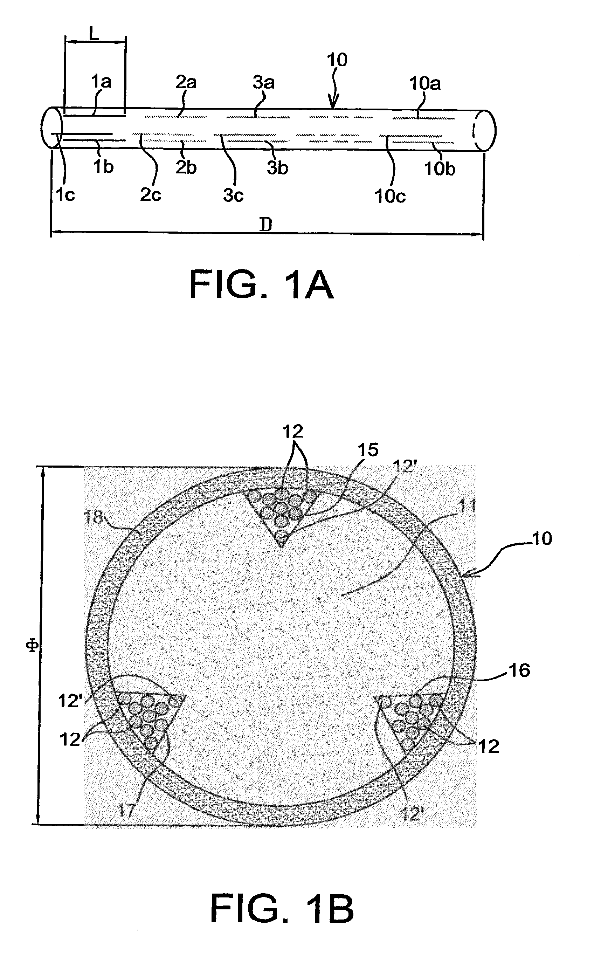

Le système de l'invention comprend un dispositif filiforme 10, de type câble, illustré sur les figures 1A et 1B, instrumenté pour la mesure distribuée des courbures d'une structure, notamment d'un tassement de terrain. Ce dispositif 10 est relié à des moyens de traitement non représentés sur ces figures. Ce dispositif comprend une armature cylindrique 11, qui peut être pleine ou creuse, supportant à sa périphérie au moins trois fibres optiques 12 localement parallèles à l'axe de l'armature, disposées par exemple dans trois rainures 15, 16 et 17. Ces fibres peuvent être, par exemple, pultrudées ou collées dans ces rainures. Ces fibres présentent, par exemple plusieurs transducteurs à réseaux de Bragg, distribués sur la circonférence dudit dispositif selon un schéma de type rosette, les transducteurs étant disposés ici à 120° les uns des autres. Les variations relatives de longueur d'onde de ces transducteurs permettent de mesurer la répartition des déformations induites par l'état local de flexion et de traction et les températures dudit dispositif.

Sur la figure 1A sont représentées schématiquement des fibres # 1a, 2a....10a disposées dans la rainure 15, des fibres # 1b, 2b...10b disposées dans la rainure 16, et des fibres # 1c, 2c....10c disposées dans la rainure 17. A titre d'exemple, six réseaux de Bragg ont été photoinscrits sur chacune des fibres, selon des techniques connues, et répartis tous les mètres. Les fibres 1a, 1b et 1c permettent de mesurer les déformations sur les six premiers mètres, les fibres 2a, 2b et 2c sur les six mètres suivants, et ainsi de suite...

Sur la figure 1B les trois fibres 12' correspondent aux fibres comportant un réseau de Bragg dans le plan de section considéré.

L'armature 11 peut être creuse ou pleine. De plus elle peut être en métal, ou avantageusement en matériau composite pour des raisons de poids et de tenue aux déformations et à la corrosion.

Le dispositif de l'invention comporte, en outre, une enveloppe externe 18 protégeant les transducteurs et assurant le transfert de la connectique optique vers une unité de mesure.

Dans un mode de réalisation avantageux, décrit ci-dessous, on utilise des transducteurs à réseaux de Bragg, les fibres portant des réseaux de Bragg en des endroits bien déterminés D'autres mode de réalisation sont possibles. En particulier on peut utiliser des fibres optiques interrogées par la méthode B-OTDR. Dans cet autre mode une seule fibre est alors nécessaire, mais pratiquement on considère au moins une fibre par rainure pour des raisons de redondance.

Mode de réalisation.

1.Propriétés métrologiques des réseaux de Bragg

La longueur d'onde d'un réseau de Bragg varie directement avec la température T et les déformations $\varepsilon$ selon l'axe de la fibre.

La variation relative de la longueur d'onde de Bragg d'un réseau de Bragg (réseau libre, non collé) en fonction de la température, s'écrit ainsi :

$$\frac{\Delta\lambda_B}{\lambda_B} = a\,\Delta T = (\alpha + \xi)\,\Delta T \approx 7.10^{-6} . \Delta T \qquad (1)$$

A la longueur d'onde de 1,55$\mu$m, ce coefficient est de l'ordre de 10 à 12 pm/K selon les fibres optiques. Lorsque le réseau de Bragg est collé sur une structure composite (type verre-époxy), il subit une déformation correspondant à la dilatation thermique de cette structure et la loi en température est réécrite comme suit :

$$\frac{\Delta\lambda_B}{\lambda_B} = a' \, . \, \Delta T = ((1-pe).\alpha_s + \xi)\,\Delta T \approx 13.10^{-6} . \Delta T \qquad (2)$$

De même, la variation relative de longueur d'onde de Bragg en fonction de la déformation fait intervenir la déformation elle-même et la variation d'indice de réfraction induite par cette déformation (effet élasto-optique) selon la relation :

$$\frac{\Delta\lambda_B}{\lambda_B} = (1-pe)\,\varepsilon = 1 - \left(\frac{n_e^2}{2}(p_{12}(1-v) - p_{11}v)\right) . \varepsilon = 0,78 . \varepsilon \qquad (3)$$

où $\varepsilon$ est la déformation longitudinale,

$n_e$ est l'indice du coeur (typiquement 1,47),

$p_{11}$ et $p_{12}$ sont des coefficients élasto-optiques de la silice ($p_{11}=0,113$ ; $p_{12}=0,252$),

$\nu$ est le coefficient de Poisson de la silice (typiquement 0,17),

et $p_e$ est la constante photo-élastique de la silice (typiquement 0,22).

A la longueur d'onde de 1,55 $\mu$m, le coefficient est environ de 1,21pm/micromètre/mètre et dépend sensiblement du dopant de la silice.

Les avantages d'une métrologie par réseaux de Bragg sont notamment les suivants :

- pas d'interférences électromagnétiques (mesure optique),
- multiplexage et lecture en longueur d'onde (signature spectrale indépendante des fluctuation de puissance optiques)
- mesures ponctuelles (locales),
- déport important de la mesure (portées kilométriques) et flexibilité de câblage,
- stabilité dans le temps et durabilité en environnements sévères,
- mesures linéaires sur une gamme de températures usuelle (-20°C, +50°C),
- non nécessité d'une connexion permanente (instrumentation connectable et déconnectable à volonté),
- très faibles pertes d'insertion autorisant une mise en série des capteurs le long d'une seule ligne de mesure,
- optimisation du coût du point de mesure en vertu du multiplexage par une seule unité d'acquisition,
- mesures multi-paramètres (température, déformations) uniformisées dans une seule unité s'acquisition et un seul protocole de traitement et d'affichage (cohérence dans l'analyse et le stockage des données).

2.Fabrication de l'armature support

Les composites les plus utilisés pour l'armature 11 sont les fibres de verre liées par une matrice polymère époxyde ou vynilester. Ces matériaux sont obtenus le plus souvent par un procédé de pultrusion qui consiste à assembler des fibres parallèles, tirées au travers d'un bain de résine. Un tel procédé est décrit dans le document référencé [3]. Une fois imprégnées, les fibres sont tirées à travers une filière chauffée. Puis la polymérisation de la résine s'effectue en des zones de chauffage puis de refroidissement contrôlé. Les profilés obtenus sont ensuite découpés à la longueur désirée à leur sortie de filière. Des accroches métalliques peuvent éventuellement être serties sur les armatures composites réalisées par pultrusion, comme décrit dans le document référencé [4]. Des écrous de fixation permettent alors de fixer un filin de traction permettant de tracter le dispositif au travers des percements tests dans le terrain.

3.Inst rumentation de l'armature

Une solution consiste à insérer les fibres en des orientations choisies au niveau des mandrins d'alimentation de la machine de pultrusion. Cette solution est adaptée à une situation industrielle de grande série.

Une autre solution consiste à coller les fibres après réalisation de l'armature pultrudé dans des rainures spécialement pratiquées à cet effet. Cette approche de petite série est décrite ci-dessous.

Les mesures de déformation sont réalisées par trois séries de transducteurs à réseaux de Bragg logés dans des rainures 15, 16 et 17 pratiquées selon des orientations angulaires définies précisément (avantageusement tous les 120°C), de sorte que l'amplitude maximale de la déformation induite par la courbure est toujours déterminée indépendamment de l'état de torsion du dispositif et de son état de traction longitudinale. Au moins trois rainures doivent être pratiquées à la périphérie du dispositif. Un nombre de rainures plus grand que trois est, en effet, possible pour des raisons de redondance. Le nombre de transducteurs résulte d'un compromis technico-économique. A titre d'exemple, pour une période spatiale de 1 mètre, un câble de 60 mètres de long comporte 180 transducteurs. Ce cas de figure est considéré à titre d'exemple ci-dessous.

Des réseaux de Bragg sont photo-inscrits de façon périodique (tous les mètres) sur chaque fibre, qui est regainée après photo-inscription, ces réseaux étant repérés précisément. Les transducteurs à réseaux de Bragg sont placés par séries de trois, comme illustré sur la figure 1A, de sorte qu'à chaque abscisse x, on associe trois décalages en longueurs d'onde représentatifs des trois déformations mesurées selon la section. Pour chacune des trois rainures 15, 16 et 17, il est nécessaire de placer plusieurs fibres en parallèle permettant de « couvrir » toute la longueur du dispositif.

La capacité de multiplexage est fonction de la gamme de mesure choisie, un exemple de multiplexage étant donné dans le document référencé [4]. A titre d'exemple, on considère une gamme de déformation de $\pm 0,15\%$, ce qui correspond à un décalage spectral d'environ $\pm$ 1,8 nm (à 1,55 $\mu$m), soit 3,6nm. A ce décalage spectral d'origine mécanique se superpose un décalage en longueur d'onde d'origine thermique (typiquement ~20 pm/°C à 1,55 $\mu$m). Pour la gamme d'utilisation ambiante [0°C, +30°C], cela correspond à un décalage en longueur d'onde d'environ 0,6 nm. Le décalage spectral total (thermique + mécanique) est donc de 4,2 nm. En gardant une marge de sécurité (prévenant tout recouvrement spectral) la largeur de bande optique allouée à chaque transducteur est donc typiquement 5 nm. Puisque la bande passante optique du système est typiquement de l'ordre de 30 nm (bande conventionnelle dite bande C), le nombre de transducteurs placés sur chaque portion de fibre de mesure est donc de six réseaux par fibre pour cette gamme de déformations. Le recours à une source spectralement plus large (bande C + L) augmente proportionnellement le nombre de réseaux de Bragg multiplexable par fibre.

Ces valeurs métrologiques sont considérées ci-dessous à titre d'exemple. Il est ainsi possible de placer un ensemble RBi de six réseaux de Bragg par fibre, répartis tous les mètres. L'ensemble RBi s'étend donc sur une longueur L=6m. Pour chaque rainure, un ensemble de dix fibres permet ainsi de couvrir une longueur D de 60 mètres comme illustré sur la figure 1A. une fibre optique supplémentaire (placée dans une des trois rainures) peut être rajoutée afin d'effectuer une auto-compensation en température. A titre d'exemple, cette fibre optique supplémentaire peut comporter six réseaux de Bragg répartis tous les dix mètres. Elle peut être insérée librement dans un capillaire en plastique à faible friction (par exemple, du téflon) de sorte que les réseaux ne soient sensibles qu'à la température.

Pour des raisons de fiabilité et de simplicité de mise en oeuvre, pour une ligne de mesure donnée, les réseaux de Bragg sont tous photo-inscrits sur la même fibre (il n'y a pas de soudure entre eux). Il est donc nécessaire de garantir la fiabilité mécanique de l'ensemble des six transducteurs photo-inscrits sur la même fibre. Cette fiabilité est apportée par la méthode dite du « test de purge », qui consiste à exercer une traction rapide de la fibre jusqu'à une déformation test afin de s'assurer que le transducteur résiste à cette déformation. Cette méthode est mise en oeuvre sur un banc mécanique spécial appelé « proof-tester », qui permet d'effectuer une traction de façon calibrée et reproductible. Ce « test de purge » applique par défaut une déformation de 1 %, celle-ci pouvant atteindre 2 % ou plus.

Sur la figure 1B, qui représente une section du dispositif de l'invention, une fibre de mesure 12', qui comporte un transducteur de Bragg dans la section considérée, est collée en fond de chaque rainure 15, 16 ou 17 tandis que neuf autres fibres 12 passent au dessus pour être ramenées à chaque extrémité du dispositif. A titre indicatif, la longueur de fibre répartie est donc de 30 x 60 m = 1800m.

Les caractéristiques du dispositif de l'invention sont récapitulées dans le tableau ci-dessous.

| Paramètre | Valeur | Observations |
|---|---|---|
| Longueur du dispositif | 60 m | Longueur conditionnée par la capacité de multiplexage et par la période spatiale |
| Diamètre mécanique du dispositif | ~5 mm | Dimensionnement de sécurité lié au déformations imposées par la courbure lors du stockage sur touret |
| Diamètre externe | ~6 mm | |
| Nombre de réseaux de Bragg par fibre | 6 | Quantité limitée par la capacité de multiplexage en longueur d'onde |
| Nombre de fibres sur une rainure | 10 | |
| Nombre de rainures instrumentées | 3 | Rainures réalisées à 120°(configuration « delta ») les unes par rapport aux autres |
| Nombre total de réseaux de Bragg de déformation | 180 | Nombre de rainures x nombre de fibre/ rainure x nombre de réseaux de Bragg/ fibre |
| Nombre de réseaux de Bragg de température | 6 | Un réseau de Bragg de mesure de température tous les 10 mètres (choix non limitatif) |

Comme montre la relation (8) ci-après, la déformation augmente en fonction de la courbure (et donc augmente à mesure que le rayon de courbure diminue). Le diamètre du dispositif de l'invention doit donc être d'autant plus petit que les rayons de courbure à mesurer sont très faibles (à titre d'exemple, quelques 0,1mm$^{-1}$).

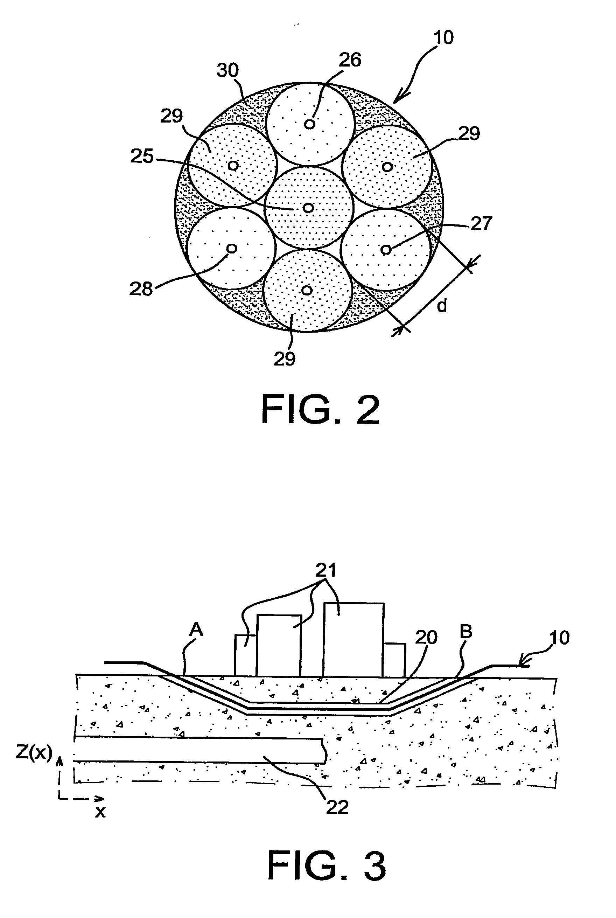

Le profil de ce dispositif, parmi les plus petits que l'on puisse obtenir par pultrusion, est représenté en figure 2. Cette autre solution correspond à un dispositif à sept fibres auto-placées selon un motif de répartition hexagonal, l'armature étant réalisée dans ce cas par une fibre de positionnement 25. Trois fibres optiques 26, 27 et 28 sont disposées à la périphérie de cette fibre 25, à 120° les unes des autres, en étant séparées par des fibres de positionnement 29. Les fibres sont toutes de même diamètre et préférablement gainées polyimide. Le diamètre normalisé des fibres optiques monomodes utilisées en télécommunication est de 125 μm. Avec un revêtement polyimide, le diamètre externe ($\Phi_{ext}$) est de l'ordre de 135 μm. Des sociétés proposent des fibres de diamètres inférieurs de l'ordre de 80 μm (environ 90 μm avec revêtement polyimide) voire 40 μm. Ces fibres peuvent ainsi supporter des rayons de courbures encore plus faibles en proportion de leur diamètre. La fabrication des fibres étant soumises à des normes strictes du point de vue dimensionnel, il est avantageux d'utiliser les mêmes fibres pour réaliser un assemblage auto-placé. Néanmoins, il est également envisageable de substituer certaines fibres optiques (fibres de positionnement 29) par des fibres de même diamètre mais de matériau différent, telles des fibres de carbone afin d'assurer une grande rigidité.

Les sept fibres 25, 26, 27, 28 et 29 sont placées dans une filière qui les ordonne selon le placement hexagonal illustré sur la figure 2. Celles-ci sont ensuite enrobées par une colle polymère 30 (par exemple en époxy) qui les maintient en position. Alternativement, les fibres peuvent également être maintenues par un capillaire de diamètre interne égal à environ trois fois le diamètre des fibres. Dans chacune des trois fibres 26, 27 et 28 (réparties tous les 120°) un réseau de Bragg est photo-inscrit afin de mesurer les déformations au niveau de chacun des coeurs de ces fibres. Ces trois réseaux sont situés dans la même section plane du câble.

Les déformations maximales subies par chacun des réseaux évoluent ainsi selon $\varepsilon_{max} = \Phi_{ext}/\rho$. Le système d'équations applicable à la structure de la figure 2 est le même que le système d'équations (10), ci-après, en remplaçant le terme $\Phi/2$ (rayon du câble) par le terme $\Phi_{ext}$ (diamètre de chaque fibre).

Un réseau de Bragg photo-inscrit supplémentaire peut être incorporé au montage afin de permettre une compensation en température. Plutôt que de le rapporter à l'extérieur, il est plus avantageux de photo-inscrire ce réseau au sein du coeur de la fibre centrale 25. Etant situé sur la ligne neutre, le coeur de cette fibre 25 n'est soumis à aucune déformation induite par la courbure. Il est, en revanche, sensible au même effet induit par la température et la déformation axiale de sorte qu'il permet d'effectuer une compensation directe de ces termes simultanément selon la relation simple (appliquée sur tous les réseaux par permutations angulaires de 120°) :

$$\frac{\Delta\lambda_a}{\Delta\lambda_a} - \frac{\Delta\lambda_d}{\Delta\lambda_d} = \frac{\Phi_{ext}}{\rho}.\cos\psi.(1 - p_e)$$

4.Instrumentation et câblage optique du dispositif

Les fibres 12 collées sur l'armature 11, par exemple dans les trois rainures 15, 16 et 17, sont recollectées via un câble optique multi-brins qui effectue le déport de la mesure vers une instrumentation. Les fibres en extrémité du dispositif sont alors à nouveau éclatées pour être connectées à un commutateur optique.

Plusieurs instruments de lecture de réseaux de Bragg peuvent être employées pour acquérir les données spectrales. A titre d'exemple, il peut s'agir d'une instrumentation portable incorporant une source large (fibre dopée erbium émettant à 1,55 $\mu$m) et une cavité interférométrique à balayage, tel que décrit dans le document référencé [4].

5.Acquisition des données

Dans la solution illustrée sur les figures 1A et AB les données sont acquises par série de six valeurs par ligne de mesure $\ell$ (1 $\leq \ell \leq$ 30). Soit p le numéro de la portion de fibre située sur chacune des rainures (1$\leq$ p $\leq$10). La première rainure 15 est instrumentée de façon progressive (p = 1 puis p = 2 etc jusqu'à p =10) par les lignes $\ell$=1 à 10, la seconde rainure 16 par les lignes 11 à 20 et la troisième rainure 17 par les lignes 21 à 30. Soit k le numéro du réseau sur chaque ligne $\ell$ (1$\leq$ k $\leq$ 6), chaque rainure j (1$\leq$ j $\leq$3) porte dix fibres (et donc 60 réseaux) selon l'exemple précédent.

La correspondance $\varepsilon$ ($\ell$,k) est connue par construction (la répartition des réseaux sur chaque fibre est connue de même que la répartition des fibres sur l'armature). $\ell$ et k sont ainsi les deux seuls paramètres accessibles à l'opérateur. A partir de ces deux paramètres de câblage, tous les autres paramètres sont déduits par une procédure de correspondance qui permet de répartir et ré-ordonner les valeurs à l'intérieur d'un seul tableau de déformations. Soit DEF (j, i) un tel tableau de dimensions 3 x 60 (selon l'exemple précédent) dont les indices correspondent à la rainure j (1$\leq$ j $\leq$3) et à l'abscisse i (1$\leq$ i $\leq$60) le long du dispositif. La position x(i) correspondant à l'abscisse i est notée $x_i$ ci-dessous. Le dénombrement du nombre de portions de fibres collées sur l'armature fournit la relation :

$$\ell = 10.(j - 1) + p \qquad\qquad (4)$$

La correspondance à établir pour ré-ordonner les données dans le tableau de déformations d'indice (j, i) est alors la suivante :

$$j = \text{ent}\left(\frac{\ell}{10}\right) + 1 \qquad\qquad (5)$$

$$p = \ell - 10.\text{ent}\left(\frac{\ell}{10}\right) \qquad (6)$$

$$i = 6.p + k \qquad (7)$$

Où la fonction ent() signifie partie entière.

Avantageusement, les réseaux de Bragg peuvent être placés selon une période h de valeur constante, de sorte que les positions de réseaux soient décrits par la relation simple : $x_i = i*h$.

D'autres configurations arbitraires sont également possibles. Dans la suite on considère le cas général d'une période non constante $h_i = x_{i+1} - x_i$.

Procédure de stockage et mise en place sur le terrain

Le dispositif de l'invention est enroulable après fabrication en usine et déroulable sur site pour être installé dans le terrain. Le dispositif passe donc par une période de stockage avant son installation.

1.Stockage

Les réseaux doivent supporter la déformation de stockage pendant une durée qui peut parfois être importante et dans des conditions (température, humidité) rarement contrôlées. En conséquence, le diamètre $\Phi$ du dispositif est défini pour ne pas imposer une déformation de stockage trop importante aux transducteurs de Bragg afin de garantir leur tenue dans le temps. Mais, il ne faut pas que le diamètre du dispositif soit trop petit pour, d'une part, garantir sa tenue en cisaillement en conditions de chantier et, d'autre part, optimiser la sensibilité au rayon de courbure. En considérant un transducteur de Bragg collé dans le plan de courbure, la déformation en flexion $\varepsilon_f$ est directement fonction du rayon de courbure local du câble $\rho$ selon la relation suivante:

$$\varepsilon_f = \frac{\Phi}{2.\rho} \qquad (8)$$

Si on considère des tourets de stockage de 1 m de diamètre (i. e., 0,5 m de rayon de courbure), on obtient un diamètre maximal de dispositif de 5 mm pour une déformation maximale admissible en stockage de 0,5%, ce qui est satisfaisant

2.Installation sur le terrain

En premier lieu, un câble de traction en acier ou de type composite est inséré dans le percement. Cette opération peut être effectuée de manière concomitante à la mise en place du dispositif, voire au préalable. Cette dernière solution est préférable car la plupart du temps le forage est tubé avec des « tubes à manchettes » sur toute sa longueur. Ceci permet d'éviter les dégradations locales d'une excavation dues à la convergence du terrain et facilite l'introduction du dispositif en réduisant les frottements. Le câble de traction est ensuite raccordé à une des accroches serties sur l'armature du dispositif. Celui-ci est alors remorqué à l'intérieur du percement en tirant sur le câble de traction pour l'extraire du percement et introduire le dispositif dans ledit percement.

Si on considère une armature composite 50 % verre - 50 % époxy, la force de traction maximale admissible (correspondant à une déformation maximale admissible $\varepsilon$) s'écrit :

$$F = \frac{\pi}{4}.\Phi^2.E.\varepsilon \qquad (9)$$

Pour une déformation maximale admissible de 0,5 %, la force maximale correspondante est 5,6 kN, soit environ 570 kg. Cette force de traction maximale admissible est compatible avec l'effort à exercer pour la mise en place sur le terrain. Toutefois, un filin supplémentaire peut être rajouté pour des raisons de sécurité. Du mortier (bentonite) peut ensuite être injecté pour solidariser le dispositif au terrain. Une mesure de « l'état zéro » des déformations est alors effectuée pour servir de point de comparaison de l'évolution future du tassement.

La figure 3 représente schématiquement une telle installation dans laquelle on effectue un percement 20 pour disposer le dispositif de l'invention 10 sous des bâtiments 21, au dessus d'un tunnel en construction 22. Les points A et B extrémités du percement 20 doivent être des points fixes (hors zone à surveiller). Le trou au point A peut être non-débouchant (trou borgne). Dans le cas de trous débouchant aux points A et B, une instrumentation peut être connectée arbitrairement au point A ou au point B. En cas de rupture (induit par un effondrement), l'instrumentation doit être connectée au point A et au point B successivement (ou par commutation optique) afin d'acquérir l'intégralité de la ligne de mesure.

Traitement des données et calcul du profil de tassement

l'instrumentation de lecture fournit trois tableaux des déformations de la section du dispositif en fonction de la distance x le long de ce dispositif, et un tableau de mesure des températures permettant d'établir une éventuelle correction thermique nécessaire. Le traitement des données correspond tout d'abord à la séparation des paramètres de traction axiale $\varepsilon$ et de flexion (rayon de courbure $\rho$) pour chaque abscisse x. On en déduit alors le tableau des dérivées secondes Z" (x) grâce auquel on reconstitue le tassement Z(x).

1.Séparation des paramètres

Chaque tableau correspond à un relevé de déformations sur l'une des trois rainures 15, 16 ou 17 illustrées sur la figure 1B orientées, à titre d'exemple, à 120° les unes des autres. Le premier tableau correspond à la mesure $\varepsilon_a(x)$, le second à $\varepsilon_b$ (x) et le troisième à $\varepsilon_c(x)$. Pour chaque point $x_i$ du dispositif, le système global à résoudre est le suivant :

$$\begin{cases} \Delta\lambda_a = \lambda_a.\left[\varepsilon + \frac{\Phi}{2.\rho}.\cos\psi\right].(1 - p_e) \qquad + \lambda_a.a'\Delta T \\ \Delta\lambda_b = \lambda_b.\left[\varepsilon + \frac{\Phi}{2.\rho}.\cos\left(\psi + \frac{2.\pi}{3}\right)\right].(1 - p_e) + \lambda_b.a'\Delta T \qquad (10) \\ \Delta\lambda_c = \lambda_c.\left[\varepsilon + \frac{\Phi}{2.\rho}.\cos\left(\psi\frac{2.\pi}{3}\right)\right].(1 - p_e) + \lambda_c.a'\Delta T \end{cases}$$

pour lesquels les paramètres des fibres sont été définis précédemment. L'angle $\psi$ correspond à l'orientation du premier transducteur par rapport au plan de la courbure (ou par rapport à la normale au plan diamétral neutre du dispositif), a' est donné par la relation (2) et $p_e$ est donné par la relation (3).
La mesure d'écart de température $\Delta T$ (rapport à l'état de référence de température absolue connue) est fournie par un réseau de température placé à proximité. L'écart de température $\Delta T$ est alors donné par la relation (1).
Les déformations sont alors obtenues par la relation suivante donnée à titre d'exemple, pour $\varepsilon_a$:

$$\varepsilon_a = \frac{\Delta\lambda_a - \frac{\lambda_a}{\lambda_T}.\frac{a'}{a}.\Delta\lambda_T}{\lambda_a.(1 - p_e)} \qquad (11)$$

En pratique, l'opérateur peut considérer que les longueurs d'onde sont très proches : $\lambda_a \approx \lambda_b \approx \lambda_c \approx \lambda_T$. Cette approximation est vraie à mieux que 1%. A partir du système d'équations (10), on déduit par calcul le système des déformations corrigées de l'effet de la température.

$$\begin{cases} \varepsilon_a = \varepsilon + \frac{\Phi}{2.\rho}.\cos\psi \\ \varepsilon_b = \varepsilon + \frac{\Phi}{2.\rho}.\cos\left(\psi + \frac{2.\pi}{3}\right) \qquad (12) \\ \varepsilon_c = \varepsilon + \frac{\Phi}{2.\rho}.\cos\left(\psi - \frac{2.\pi}{3}\right) \end{cases}$$

Ce système à trois équations permet de déterminer les trois inconnues ($\varepsilon$, $\rho$ et $\psi$). La déformation axiale s'écrit alors :

$$\varepsilon = \frac{\varepsilon_a + \varepsilon_b + \varepsilon_c}{3} \qquad (13)$$

Elle correspond classiquement à la partie sphérique de la résolution des équations de rosettes. L'angle $\psi$, peut être déterminé par la relation suivante, avec $-\pi/2 < \Psi < \pi/2$:

$$tg(\psi) = \frac{\varepsilon_b - \varepsilon_c}{\sqrt{3.(\varepsilon_a - \varepsilon)}} \qquad (14)$$

Connaissant $\psi$ et $\varepsilon$, on en déduit le rayon de courbure local $\rho$ grâce à la première équation du système (12) et en appliquant la relation trigonométrique bien connue :

$$\cos(\psi) = \frac{1}{\sqrt{1 + tg(\psi)^2}} \qquad (15)$$

La déformation due exclusivement à la flexion $\varepsilon_f(x)$ est alors fonction du rayon de courbure local du dispositif selon la relation :

$$Z''(x) = \frac{1}{\rho(x)} = K.\varepsilon_f(x) \qquad (16)$$

où K est une constante d'étalonnage qui dépend du diamètre du dispositif et des conditions de collage (en première approche : $K=2/\Phi$). La correction des effets de la température est effectuée sur la mesure de déformation de traction $\varepsilon$ (équation 13).

2.Reconstitution du profil de tassement Z(x)

Connaissant le profil des déformations de flexion $\varepsilon_f(X)$, on peut en déduire le profil des rayons de courbures et la fonction Z"(x) d'après la relation (16). Cette relation peut être intégrée une première fois pour obtenir le gradient de tassement Z'(x) puis une seconde fois pour en déduire Z(x). L'intégration peut se faire par la méthode d'Euler modifiée. Cette méthode est différente de la méthode d'Euler traditionnelle au sens où elle prend en compte la moyenne des deux dérivées extrêmes (aux points i et i+1) au lieu de ne considérer que la première dérivée (au point i). Les dérivées premières Z'i sont calculées par la relation de récurrence suivante:

$$Z'_{i+1} = Z'_i + \frac{h_i}{2}.(Z''_i + Z''_{i+1}) \qquad (17)$$

Cette méthode correspond à un développement limité en série de Taylor d'ordre 2. La relation de développement (17) est initiée par les conditions aux limites $Z'_1=0$ et $Z'(x_n)=0$. D'autres méthodes correspondant à des développements en série d'ordres plus élevés peuvent être appliquées.

Le profil de tassement Z(x) est alors obtenu par une seconde intégration selon un développement limité en série de Taylor à l'ordre 2, incorporant Z' et Z", avec comme conditions aux limites $Z_1=0$ et $Z_n=0$ (zones de référence). Le profil de tassement est alors obtenu par la relation de récurrence suivante (Taylor, ordre 2) :

$$Z_{i+1} = Z_i + Z'_i.h_i + Z''_i.\frac{h_i^2}{2} \qquad (18)$$

Une autre solution prend en compte les propriétés d'ajustement par des fonctions dites « *spline* » décrites dans le document référencé [5]. Ce principe d'ajustement consiste à trouver une série de polynomes reliant chacun des points de la façon la plus homogène possible, en les raccordant en appliquant des conditions de continuités sur les valeurs et les dérivées premières. Cet ajustement mathématique est donc respectueux de la continuité physique du milieu matériel. On recherche comme polynomes d'interpolation du profil de tassement des polynomes d'ordre 3 (d'où le terme « cubic *spline* ») de la forme:

$$Z_i(x) = a_i.(x-x_i)^3 + b_i.(x-x_i)^2 + c_i.(x-x_i) + d_i \quad (19)$$

$Z_1(x)$ est un point de la courbe de la fonction *spline* interpolée entre chaque point expérimental $A_i(x_i, Z_i)$ et $A_{i+1}(x_{i+1}, Z_{i+1})$. Il existe donc autant de jeux de paramètres $(a_i, b_i, c_i, d_i)$ qu'il y a de segments $A_i A_{i+1}$. Ainsi, soit n le nombre de points expérimentaux, il y a donc (n-1) intervalles et 4.(n-1) paramètres pour décrire cette fonction « *spline* ».

Si l'on considère l'intervalle [i, i+1], de largeur $h_i$, borné par les points $A_i$ et $A_{i+1}$. Pour chacun de ces deux points, on peut appliquer l'équation de la fonction « *spline* » $Z_i(x)$. On obtient ainsi les deux relations suivantes, pour le même intervalle i:

$$\text{Pour } x = x_i : Z_i = d_i \quad (20)$$

$$\text{Pour } x = x_{i+1} : Z_{i+1} = a_i.h_i^3 + b_i.h_i^2 + c_i.h_i + d_i \quad (21)$$

La continuité de la fonction *spline* (au point i+1) s'obtient par récurrence:

$$Z_{i+1} = d_{i+1} = a_i.h_i^3 + b_i.h_i^2 + c_i.h_i + d_i \quad (22)$$

De même, les relations sur la dérivée première au point i (x=xi) sont:

- Pour l'intervalle [i,i+1], au point $x=x_i$ : $Z'_i = c_i$ (23)
- Pour l'intervalle [i-1,i], au point $x=x_i$ :

$$Z'_{i-1} = 3.a_{i-1}.h_{i-1}^2 + 2.b_{i-1}.h_{i-1} + c_{i-1} \quad (24)$$

Ces deux dérivées doivent être égales pour assurer la continuité des pentes. On obtient ainsi la relation de continuité sur les dérivées premières:

$$Z'_i = c_i = Z'_{i-1} = 3.a_{i-1}.h_{i-1}^2 + 2.b_{i-1}.h_{i-1} + c_{i-1} \quad (25)$$

Pour simplifier la procédure, il est d'usage de mettre ces équations en fonction des dérivées secondes de la fonction « *spline* ». Cette dérivée seconde s'écrit, pour chaque intervalle i:

$$Z''(x) = 6.a_i.(x-x_i) + 2.b_i \quad (26)$$

On définit alors les vecteurs $S_i(x_i)$ représentant la dérivée seconde sur chacun des intervalles. Pour chacun des deux points $A_i$ et $A_{i+1}$ bornant l'intervalle i, on peut appliquer la relation (26) et on obtient ainsi, pour le même intervalle i:

$$\text{Pour } x = xi : S_i = 2.b_i \quad (27)$$

$$\text{Pour } x = x_{i+1} : S_{i+1} = 6.a_i.h_i + 2b_i \quad (28)$$

Il est alors possible de formuler les paramètres $a_i$, $b_i$, $c_i$ directement en fonction des vecteurs Si. On obtient ainsi:

D'après la relation (27) :

$$b_i = \frac{S_i}{2} \qquad (29)$$

D'après la relation (28) :

$$a_i = \frac{(S_{i+1} - S_i)}{6.h_i} \qquad (30)$$

D'après les relations (20) et (21) : $c_i = \frac{Z_{i+1} - Z_i}{h_i} - a_i.h_i{}^2 - b_i.h_i$

Soit, en remplaçant $a_i$ et $b_i$ en fonction de Si (équations (29) et (30)), on obtient:

$$c_i = \frac{Z_{i+1} - Z_i}{h_i} - \frac{h_i}{6} \cdot (S_{i+1} - S_i) - \frac{S_i}{2} \cdot h_i$$

Le premier terme s'identifie à un gradient du profil de tassement, de sorte que l'équation se réécrit:

$$c_i = Z'_i - \frac{h_i}{6} \cdot (S_{i+1} - S_i) - \frac{S_i}{2} \cdot h_i \qquad (31)$$

L'équation (25) peut être réécrite en fonction de ces paramètres $S_i$, en remplaçant $a_i$, $b_i$ et $c_i$ par leurs valeurs données respectivement par les équations (30), (29) et (31). On obtient ainsi l'équation de continuité correspondant à l'équation de récurrence suivante:

$$S_{i-1}.h_{i-1} + 2.S_i.(h_i + h_{i-1}) + S_{i+1}.h_i = 6.(Z'_i - Z'_{i-1}) \quad (32)$$

Dans le cas d'une période constante $h_{i-1} = h_i = h_{i+1}$, cette équation de continuité se simplifie et devient:

$$S_{i-1} + 4.S_i + S_{i+1} = 6.Z''_i \qquad (33)$$

L'équation de récurrence (33) permettant de déterminer les paramètres $S_i$ (et ainsi de construire la courbe « *spline* ») est donc directement fonction de la dérivée seconde du profil de tassement $Z_i$, c'est-à-dire proportionnelle à la répartition des déformations de flexion mesurées.

Les équations (32) et (33) sont valables pour $2 \leq i \leq n-1$, soit n-2 équations. Il convient donc d'y adjoindre deux autres équations correspondant aux conditions aux limites pour construire définitivement la courbe *spline*.

Les deux zones de référence à chaque extrémité du dispositif ont pour objectif de définir les conditions initiales pour la fonction de tassement et ses deux dérivées Z' et Z". Une fois installées sur les zones de référence, les extrémités du dispositif sont ainsi à altitude fixées et horizontales en sortie de percement ($Z'_1 = 0$ et $Z'_n = 0$). Pour la démonstration, on considère une altitude de référence constante en A et en B ($Z_1 = 0$, $Z_n = 0$). De plus, On considère qu'au moins deux zones de mesure sont placées horizontalement selon cette zone de référence de sorte que $Z''_1 = 0$ et $Z''_n = 0$. D'après les équations (20) et (23), il s'ensuit que respectivement $d_1 = 0$, $d_n = 0$ et que $c_1 = 0$ et $c_n = 0$. Les paramètres ($a_1$, $b_1$) et ($a_n$, $b_n$) sont également nuls par voie de conséquence de même que les paramètres $S_1$, $S_2$, $S_{n-1}$ et $S_n$.

L'équation (33) se représente sous une forme matricielle de la forme $M_{i\xi} = S_i \; Z''_\xi$. Cette équation peut être résolue par une méthode itérative ou en calculant la matrice inverse dont le vecteur Si se déduit en calculant la

matrice inverse $M_{i\xi}^{-1} = \dfrac{coM_{i\xi}^{\mathrm{T}}}{Det\left(M_{i\xi}\right)}$

Les vecteurs $a_i$ et $b_i$ sont alors déduits des relations (30) et (29) respectivement. Les erreurs imputables à ces paramètres sont principalement d'ordre expérimental car les calculs sont très simples et n'engendrent pas d'erreurs d'analyse numérique importantes.

Les paramètres $c_i$ et $d_i$ sont ensuite déduits respectivement des équations de récurrence (25) et (22) (équations de continuité) compte-tenu des conditions initiales précédemment décrites. Cette reconstitution peut être effectuée à partir des deux extrémités afin de diviser par deux le nombre maximal de points à traiter (typiquement 2 x 30 points pour un câble de 60 mètres).

3.Analyse qualitative des résultats

L'incertitude sur la mesure de la profondeur de tassement peut être estimée en tenant compte de l'incertitude sur la mesure de déformation. En effet, les entreprises de travaux publics demandent d'assurer une précision de $\pm$ 1 mrad (erreur de profondeur de 1 mm sur un mètre de période spatiale). L'incertitude sur le gradient angulaire s'écrit:

$$\Delta\left[\frac{d\alpha(x)}{dx}\right] = 1 \text{ mrad/m} = \frac{2}{\Phi}.\Delta_{\varepsilon_f}(x) \qquad (34)$$

Pour un câble instrumenté de 5 mm de diamètre, l'incertitude de mesure en déformation correspondante est de $\pm$ 2,5 micromètres/mètre. Cette précision recherchée sur l'amplitude du tassement peut être obtenue avec les moyens proposés a fortiori si l'on effectue un moyennage temporel sur plusieurs valeurs pour réduire l'incertitude de mesure des longueurs d'ondes.

L'information de courbure locale peut enfin être comparée à l'information de traction locale. Cet examen fournit une information sur le type d'affaissement de terrain rencontré. Dans le cas d'un tassement important en arc-de-cercle de 1 m de flèche, le rayon de courbure moyen s'écrit $\rho = L^2/(8.z)$ et vaut 450 mètres pour un câble de 60 mètres de long. La déformation moyenne dûe à la traction varie au premier ordre comme $\varepsilon = 2.z^2/l^2$ et vaut environ 5 60 micromètres/mètre. En revanche, la déformation engendrée par la courbure n'est alors que de 6 micromètres/mètre, valeur relativement faible, proche de la résolution d'appareillage. Selon ce cas de figure, la déformation induite par la traction peut donc excéder considérablement la déformation induite par la courbure.

Inversement, la déformation de courbure peut excéder la déformation de traction en cas de courbure locale importante (affaissement de terrain localisé et courbure pure, sans traction, du câble). Ce cas de figure est notamment rencontré en cas de discontinuité dans le profil de tassement induisant un cisaillement du câble (et donc un moment de flexion important).

Exemples d'applications

Bien qu'initialement conçu pour des applications de type génie civil, le système de l'invention peut être utilisé dans de nombreux secteurs d'applications requérant une mesure distribuée de déformation, de flexion, voire de détection de fissures.

Dans le domaine du génie civil, il peut être utilisé pour surveiller l'évolution des tassements non uniformes voire des effondrements imprévus qui peuvent provoquer des accidents graves et engendrer des coûts de réhabilitation très importants. Un grand nombre d'infrastructures sont concernées, parmi lesquelles les bâtiments, les ouvrages d'art, les tours, les ponts, les barrages, les autoroutes, les voies ferrées, les aéroports, mais aussi les transports terrestres ou « off-shores » par « pipelines » enfouis ou posés au fond de l'océan, par exemple courbure d'un conduit « riser » au point de contact avec le sol. Il peut également surveiller l'évolution du terrain lors du percement de galeries ou de tunnels sous des ouvrages déjà construits afin de ne pas engendrer de dommages. Au fur et à mesure de l'avancement des travaux d'excavations, une surveillance du terrain (déformations, inclinaison) permet alors de contrôler un poste d'injection de ciment dans les zones fragilisées afin de compenser au fur et à mesure l'affaiblissement du terrain (méthode dite d'injection de compensation).

Le système de l'invention peut également trouver une application dans d'autres secteurs, tel que l'aéronautique dans la mesure, embarquée ou non, de déformations distribuées dans une structure complexe (par exemple un avion gros porteur).

# EP 1 723 458 B1

## REFERENCES

[1] US 5, 321, 257

[2] « Industrial applications of the BOTDR optical fiber strain sensor » de H. Ohno, H. Naruse, M. Kikara et A.Shimada (opt. Fiber Tech., 7, 2001, pages 45-64).

[3] FR 2791768

[4] « Health monitoring of the Saint-Jean Bridge of Bordeaux, France, using Fiber Bragg gratings Extensometers » de S. Magne, J. Boussoir, S. Rougeault, V. Marty-Dewynter, P. Ferdinand, et L. Bureau (SPIE 5050, Conf. on Smart Structures and Materials, 2-6 mars 2003, San Diego, Californie, USA, pages 305-316)

[5] « Applied Numerical Analysis » de C. F. Gérald (Addison-Wesley, 1970, pages 290-293)

## Revendications

1. Système de mesure distribuée ou répartie des déformations axiales et de flexion d'une structure comprenant au moins un dispositif filiforme (10) instrumenté pour la mesure distribuée ou répartie de ces déformations axiales et de flexion, et des moyens de traitement des signaux de mesure délivrés par ce dispositif, **caractérisé en ce que** chaque dispositif comprend une armature cylindrique (11,25) supportant à sa périphérie au moins trois fibres optiques (12) localement parallèles à l'axe de l'armature et fixées à celle-ci, **en ce que** les fibres optiques (12) sont disposées dans des rainures (15,16,17 ;25,29) disposées selon des orientations angulaires déterminées à la périphérie de l'armature (11 ;25,29) et **en ce que** les moyens de traitement mettent en oeuvre des moyens de multiplexage spectral ou temporel des signaux provenant des fibres optiques.

2. Système selon la revendication 1, dans lequel chaque fibre présente au moins un transducteur à réseaux de Bragg, dans lequel les moyens de traitement permettent une mesure distribuée, et dans lequel les moyens de multiplexage sont des moyens de multiplexage en longueur d'onde.

3. Système selon la revendication 1, dans lequel les moyens de traitement permettent une mesure répartie réalisée par la méthode de réflectométrie Brillouin.

4. Système selon la revendication 1, dans lequel les fibres optiques (12) sont disposées dans au moins trois rainures pratiquées à la périphérie de l'armature.

5. Système selon la revendication 4, dans laquelle l'armature est pleine ou creuse.

6. Système selon la revendication 1, comprenant au moins une fibre optique supplémentaire qui permet d'effectuer une auto-compensation en température.

7. Système selon la revendication 6, dans lequel cette fibre optique supplémentaire comporte des réseaux de Bragg répartis tout au long de sa longueur.

8. Système selon la revendication 6, dans lequel cette fibre optique supplémentaire est insérée librement dans un capillaire en plastique à faible friction.

9. Système selon la revendication 1, dans lequel le dispositif (10) comprend une enveloppe externe (18).

10. Système selon la revendication 1, dans lequel l'armature est obtenue par pultrusion d'un matériau composite de type verre-époxy ou verre-vynilester.

11. Système selon la revendication 1, dans lequel des accroches métalliques sont serties sur l'armature (11).

12. Système selon la revendication 1, dans lequel les fibres optiques sont recollectées via un câble optique multibrins qui effectue le déport de la mesure vers les moyens de traitement.

13. Système selon la revendication 1, dans lequel l'armature (11) est réalisée par des fibres de positionnement (25,29).

14. Système selon la revendication 13, qui comprend sept fibres (25, 26, 27, 28,29) de même diamètre autoplacées selon un mode hexagonal, trois fibres (26, 27, 28), réparties à 120° à la périphérie de l'armature, étant des fibres optiques.

15. Système selon la revendication 14, dans lequel les fibres sont enrobées dans une colle polymère (30).

16. Système selon la revendication 14, dans lequel les fibres sont maintenues par un capillaire.

17. Système selon la revendication 13, dans lequel l'armature est une fibre optique (25).

18. Système selon la revendication 17, dans lequel au moins un réseau de Bragg est inscrit dans cette fibre (25) afin de permettre une compensation en température.

19. Application du système selon l'une quelconque des revendications précédentes à la mesure distribuée ou répartie des déformations axiales et de flexion d'un terrain susceptible d'effondrement.

**Patentansprüche**

1. System zur verteilten oder unterteilten Messung der axialen und Biege-Verformungen einer Struktur, umfassend wenigstens eine filiforme Vorrichtung (10), die zur verteilten oder unterteilten Messung dieser axialen und Biege-Verformungen ausgelegt ist, sowie Mittel zur Verarbeitung der von dieser Vorrichtung gelieferten Messsignale, **dadurch gekennzeichnet, dass** jede Vorrichtung eine zylindrische Armatur (11, 25) umfasst, die an ihrem Umfang wenigstens drei optische Fasern (12) trägt, welche lokal parallel zur Achse der Armatur und an dieser befestigt sind, dass die optischen Fasern (12) in Rillen (15, 16, 17; 25, 29) angeordnet sind, die gemäß bestimmten Winkelorientierungen am Umfang der Armatur (11; 25, 29) angeordnet sind, und dass die Verarbeitungsmittel Mittel zur spektralen oder zeitlichen Multiplexierung der Signale verwenden, die von den optischen Fasern stammen.

2. System nach Anspruch 1, bei dem jede Faser wenigstens einen Bragggitter-Transduktor aufweist, wobei die Verarbeitungsmittel eine verteilte Messung erlauben, und wobei die Multiplexierungsmittel Wellenlängen-Multiplexierungsmittel sind.

3. System nach Anspruch 1, bei dem die Verarbeitungsmittel eine verteilte Messung erlauben, die mittels des Brillouin-Reflektometrieverfahrens realisiert wird.

4. System nach Anspruch 1, bei dem die optischen Fasern (12) in wenigstens drei Rillen angeordnet sind, die am Umfang der Armatur vorgesehen sind.

5. System nach Anspruch 4, bei dem die Armatur massiv oder hohl ist.

6. System nach Anspruch 1, umfassend wenigstens eine zusätzliche optische Faser, die die Durchführung einer Temperatur-Autokompensation erlaubt.

7. System nach Anspruch 6, bei dem diese zusätzliche optische Faser Bragggitter umfasst, die über ihre gesamte Länge verteilt sind.

8. System nach Anspruch 6, bei dem diese zusätzliche optische Faser frei in eine Kunststoffkapillare mit geringer Reibung eingesetzt ist.

9. System nach Anspruch 1, bei dem die Vorrichtung (10) eine äußere Umhüllung (18) umfasst.

10. System nach Anspruch 1, bei dem die Armatur durch Pultrusion eines Verbundmaterials vom Typ Glas-Epoxid oder Glas-Vinylester enthalten ist.

**11.** System nach Anspruch 1, bei dem Metallhaken an der Armatur (11) eingefasst sind.

**12.** System nach Anspruch 1, bei dem die optischen Fasern mittels eines optischen mehradrigen Kabels gesammelt sind, das die Übertragung der Messung hin zu den Verarbeitungsmitteln gewährleistet.

**13.** System nach Anspruch 1, bei dem Armatur (11) durch Positionierungsfasern (25, 29) realisiert ist.

**14.** System nach Anspruch 13, das sieben Fasern (25, 26, 27, 28, 29) mit gleichem Durchmesser umfasst, welche gemäß einem Hexagonalmodus autoplaziert sind, wobei drei Fasern (26, 27, 28), die alle 120° am Umfang der Armatur verteilt sind, optische Fasern sind.

**15.** System nach Anspruch 14, bei dem die Fasern in einem Polymerklebstoff (30) eingehüllt sind.

**16.** System nach Anspruch 14, bei dem die Fasern durch eine Kapillare gehalten werden.

**17.** System nach Anspruch 13, bei dem die Armatur eine optische Faser (25) ist.

**18.** System nach Anspruch 17, bei dem wenigstens ein Bragggitter in diese Faser (25) eingeschrieben ist, um eine Temperaturkompensation zu ermöglichen.

**19.** Verwendung des Systems nach einem der vorhergehenden Ansprüche bei der verteilten oder unterteilten Messung von axialen und Biege-Verformungen eines Grundstücks, das eine Absenkung erfahren kann.

**Claims**

**1.** System for distributed or dispersed measurement of axial and bending deformations of a structure including at least one threadlike device (10) equipped for the distributed or dispersed measurement of these axial and bending deformations, and means for processing measurement signals generated by said device, **characterised in that** each device includes a cylindrical reinforcement (11, 25) supporting, at its periphery, at least three optical fibres (12) locally parallel to the axis of the reinforcement and fixed to this one, **in that** the optical fibres (12) are housed in grooves (15, 16, 17; 25, 29) formed in specifically defined angular orientations at the periphery of the reinforcement (11; 25,29), and **in that** the processing means implement means for spectral or time division multiplexing of signals coming from optical fibres.

**2.** System according to claim 1, **characterised in that** each fibre has at least one Bragg grating transducer, in which the processing means allow for a distributed measurement, and in which the multiplexing means are wavelength multiplexing means.

**3.** System according to claim 1, **characterised in that** the processing means allow for a dispersed measurement performed by the Brillouin reflectometry method.

**4.** System according to claim 1, **characterised in that** the optical fibres (12) are arranged in at least three grooves formed at the periphery of the reinforcement.

**5.** System according to claim 4, **characterised in that** the reinforcement is solid or hollow.

**6.** System according to claim 1, **characterised in that** it includes at least one additional optical fibre that makes it possible to achieve a temperature self-compensation.

**7.** System according to claim 6, **characterised in that** said additional optical fibre has Bragg gratings distributed along its entire length.

**8.** System according to claim 6, **characterised in that** said additional optical fibre is freely inserted into a low-friction plastic capillary.

**9.** System according to claim 1, **characterised in that** the device (10) includes an outer casing (18).

10. System according to claim 1, **characterised in that** the reinforcement is obtained by pultrusion of a glass-epoxy- or glass-vinylester-type composite material.

11. System according to claim 1, **characterised in that** metal fasteners are crimped on the reinforcement (11).

12. System according to claim 1, **characterised in that** the optical fibres are recollected via a multistrand optical cable that transmits the measurement to processing means.

13. System according to claim 1, **characterised in that** the reinforcement (11) is created by a positioning fibre (25).

14. System according to claim 13, **characterised in that** it includes seven fibres (25, 26, 27, 28, 29) having the same diameter, self-positioned in a hexagonal pattern, three fibres (26, 27, 28), distributed at 120° at the periphery of the reinforcement, being optical fibres.

15. System according to claim 14, **characterised in that** the fibres are coated with a polymer glue (30).

16. System according to claim 14, **characterised in that** the fibres are held by a capillary.

17. System according to claim 13, **characterised in that** the reinforcement is an optical fibre (25).

18. System according to claim 17, **characterised in that** at least one Bragg grating is inscribed in this fibre (25) so as to allow for a temperature compensation.

19. Application of the system according to any one of the previous claims, wherein the system is applied to the distributed or dispersed measurement of axial and bending deformations of a ground capable of collapsing.

# FIG. 1A

# FIG. 1B

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6563107 B

- FR 2791768

**Littérature non-brevet citée dans la description**

- **H. OHNO ; H. NARUSE ; M. KIKARA ; A.SHIMADA.** Industrial applications of the BOTDR optical fiber strain sensor. *opt. Fiber Tech.,* 2001, vol. 7, 45-64

- **S. MAGNE ; J. BOUSSOIR ; S. ROUGEAULT ; V. MARTY-DEWYNTER ; P. FERDINAND ; L. BUREAU.** Health monitoring of the Saint-Jean Bridge of Bordeaux, France, using Fiber Bragg gratings Extensometers. *SPIE 5050, Conf. on Smart Structures and Materials,* 2003, 305-316
- **C. F. GÉRALD.** Applied Numerical Analysis. *Addison-Wesley,* 1970, 290-293